# EUROPEAN PATENT SPECIFICATION

(11) **EP 4 592 774 B1**
(45) Date of publication and mention of the grant of the patent: **16.09.2026**
(21) Application number: 24154051.7
(22) Date of filing: 25.01.2024
(51) Int. Cl.: G05B 19/042, G06F 1/30, G05B 23/02

(54) **POWER DOWN SEQUENCING IN PROCESS CONTROL SYSTEMS**
ABSCHALTSEQUENZIERUNG IN PROZESSSTEUERUNGSSYSTEMEN
SÉQUENÇAGE DE MISE HORS TENSION DANS DES SYSTÈMES DE COMMANDE DE PROCESSUS

(43) Date of publication of application: 30.07.2025
(73) Proprietor: ABB SCHWEIZ AG, 5400 Baden (CH)
(72) Inventor: LI, Haoran, 32427 Minden (DE); KEUL, Thomas, 63579 Freigericht (DE); SHI, Huan, Shangcheng District, Hangzhou, 310000 (CN); QU, Yvan-Yongfei, Hangzhou, 311201 (CN); POOK, Stefan, 32423 Minden (DE)
(74) Representative: Maiwald GmbH

(56) References cited:
- US-A1- 2004 088 589
- US-A1- 2006 069 870
- US-A1- 2013 275 780

## Description

### FIELD OF THE INVENTION

The invention relates to apparatus and methods for power down sequencing in process control systems.

### BACKGROUND

In process control systems, power down sequencing is an important aspect, with most control applications requiring at least a subset of the signals to be stored before shutdown, to enable continued operation following restoration of power. Nonetheless, robustness of process control systems to power loss remains an issue.

US 2013/0275780 A1, US 2004/0088589 A1 and US 2006/0069870 A1 describe data retention methods in which energy storage devices provide backup power to allow temporary data to be transferred to non-volatile memory in the event of power failure.

### SUMMARY

It would be desirable to improve the reliability of apparatus and methods implementing power down sequencing in process control systems. There is therefore provided, in a first aspect of invention, power down circuitry for a controller of a process control system as defined in claim 1.

The binary indication may be based on a determination as to whether a time required for the power down sequence exceeds a time available for the power down sequence. In one example described further herein, the reliability indicator comprises a prediction of a timepoint at which component degradation causes the state retention capability of the power down circuitry to fall below requirements, that is, to reach the point at which the power down circuitry can no longer obtain and store the control application state data in its entirety following power down, for example by reason of the time available for the power down sequence, which is a function of component condition, falling below the time required for the power down sequence, optionally taking into account a safety factor.

In this way, the reliability indicator is presented in a way which is readily understandable by an operator of the automation system comprising the process control system. The reliability indicator may be used by operator as an indication of system state, prompting the operator to take action to ensure proper operation of the automation system.

The state retention capability may be determined based on one or more operational parameters. The one or more operational parameters may comprise one or more of the following:
- power consumption (of all components necessary for carrying out the power down sequence);
- amount of energy stored in the energy storage device;
- amount of control application state data required to be saved by a control application executing on the controller (i.e., to retain the state of the control application);
- a write data rate of the data storage device;
- a detection time; and
- in the case that the data storage device comprises a cache, a time constant of the cache.

The power down circuitry may be configured to determine the power consumption by measurement, for example. Additionally or alternatively, the power down circuitry may be configured to obtain, from an external source, a previously measured value of the power consumption.

The control application may provide a value indicating the amount of control application state data required to be retained. The power down circuitry may be configured to extract that value itself, and/or to obtain the value from an external source, such as the controller.

The power down circuitry may be further configured to determine the amount of energy stored in the energy storage device. The power down circuitry may be further configured to determine a capacity of the energy storage device. The power down circuitry may be further configured to determine the capacity of the energy storage device by performing self-diagnostics. Assuming that the energy storage device remains fully charged, the amount of energy stored in the energy storage device may be assumed to be equal to the current maximum capacity of the energy storage device, taking into account that the maximum capacity of the energy storage device may reduce over time due to aging of components and other kinds of degradation.

The power down circuitry may be further configured to perform degradation modelling of the energy storage device. The power down circuitry may be further configured to utilize a degradation model to model degradation in capacity of the energy storage device over time. The power down circuitry may be further configured to perform degradation modelling to predict a future condition (e.g., capacity) of the energy storage device. The power down circuitry may be further configured to perform degradation modelling to predict a remaining operational lifetime of the energy storage device. The power down circuitry may be further configured to perform degradation modelling to predict time to failure of the energy storage device. The time to failure may correspond to the timepoint at which the capacity of the energy storage device regresses to a level below that which is necessary for completing one or more operations of the power down sequence, comprising for example obtaining and storing the control application data and/or resuming execution of the control application following restoration of power. The power down circuitry may be further configured to perform degradation modelling to suggest predictive maintenance. The power down circuitry may thus be further configured to predict when maintenance should be performed, based on a condition of the energy storage device, for example its capacity. By performing degradation modelling of the energy storage device, the power down circuitry as described herein facilitates more accurate prediction of future failures, enabling the plant operator to exchange hardware that operates close to the limit at a regular maintenance time when the plant is not operational.

Following determination of the at least one reliability indicator, the power down circuitry may be configured to send the reliability indicator for output to the operator. The information may then be presented to the user by an appropriate HMI, such as that of the automation system comprising the process control system.

The power down circuitry may be configured to obtain from the user an indication of the most important control application state data to be retained (upon power down, i.e., until next maintenance) and to use the user-provided indication of importance when obtaining and storing the control application state data in the data storage device as part of the power down sequence, for example by prioritizing the data indicated as being important. The user-indication may be obtained in response to the presentation of the reliability indicator, for example, and used in the event that the power down circuitry subsequently detects power loss and carries out the power down sequence.

The control application state data may be obtained or extracted from a control application executing on the controller. The control application state data may comprise data indicating at least part of a state of the control application. The control application state data may be referred to alternatively as process data.

The power down circuitry may be further configured to perform a power up sequence to resume execution of the control application following restoration of power. Resuming execution of the control application may comprise retrieving the control application state data from the data storage device and using it to restore the application state that existed prior to the power loss.

According to a second aspect, there is provided a controller for a process control system comprising the power down circuitry of the first aspect. In one example, the power down circuitry may be implemented by the same logic circuitry which executes the control application. In other examples, the power down circuitry and the logic circuitry executing the control application may be implemented separately.

According to a third aspect, there is provided a process control system comprising the power down circuitry of the first aspect and/or the controller of the second aspect. According to a fourth aspect, there is provided an industrial automation system comprising the power down circuitry of the first aspect and/or the controller of the second aspect and/or the process control system of the third aspect.

According to a fifth aspect, there is provided a method of performing power down sequencing for a controller of a process control system, according to claim 13.

The method of the fifth aspect may be computer implemented. Optional features of the first aspect may form part of the second aspect, mutatis mutandis.

According to a further aspect, there is provided a computer-readable (storage) medium comprising instructions which, when executed by a computing system, enable or cause the computing system to perform the method of the fifth aspect. The computer-readable medium may be transitory or non-transitory, volatile or non-volatile.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

By "(process) automation system" is meant an industrial plant or production plant comprising one or more pipelines, production lines, and/or assembly lines for transforming one or more educts into a product and/or for assembling one or more components into a final product.

By "predictive maintenance" is meant condition-based maintenance carried out as suggested by an estimation of the degradation state of a component, in this case the energy storage device, which may comprise at least one capacitor.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

### BRIEF DESCRIPTION OF THE DRAWINGS

A detailed description will now be given, by way of example only, with reference to the accompanying drawings, in which:-
FIG. 1 illustrates a process control system;
FIG. 2 schematically illustrates components of the process control system of FIG. 1 in situ; and
FIG. 3 illustrates a computing system that can be used in accordance with the systems and methods disclosed herein.

### DETAILED DESCRIPTION

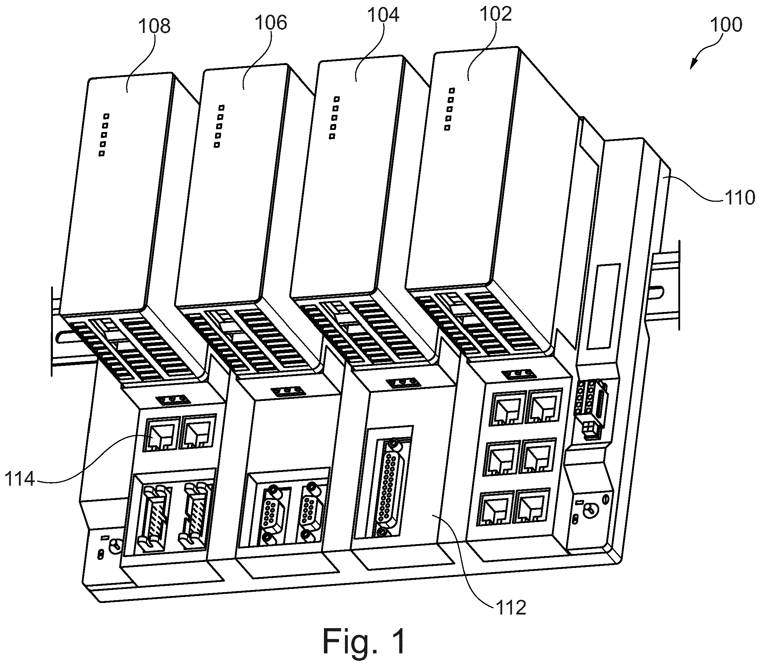

FIG. 1 illustrates a process control system 100 for controlling an industrial process carried out by an automation system (not shown). The process control system 100 comprises several different hardware units 102-108 physically and communicatively coupled to one another via a mounting termination unit (MTU) 110, commonly known as a backplane. The units illustrated in FIG. 1 include a standalone controller 102, a standalone fieldbus adapter 104 of a first type, a standalone fieldbus adapter 106 of a second type, and a controller 108 comprising an integrated fieldbus adapter. Each controller 102, 108 communicates with other components of the automation system, such as the engineering tool 200 described herein, over a control network. To that end, each controller 102, 108 is provided with network interfaces, such as that illustrated at 114, for communication via at least one ethernet-based fieldbus.

The mounting termination unit (MTU) 110 comprises a number of slots 112 for accommodating the units 102-108. Each unit 102-108 can be detachably connected to the mounting termination unit 110 via the corresponding slot 112. The mounting termination unit 110 may further comprise circuitry (not shown) for powering the units and/or for accommodating a power module.

Each controller 102, 108 is configured to control a respective process carried out by the automation system (not shown). The process control system 100 may find application in any field of industry where process automation is desired, such as energy, oil and gas, chemical, petrochemical, and so on. The controller 102, 108 handles process control and monitoring for the automation system by receiving input signals from sensors and instruments, and outputting control signals for controlling plant equipment such as pumps, valves, conveyors, mixers, and heaters. Any such sensor, instrument or plant equipment may form part of one or more of the field devices 202 described herein. The controller 102, 108 is configured to execute a process control application to generate the control signals on the basis of the input signals. The control application may comprise control logic instructing the controller 102, 108 how to respond to all input signals with appropriate control signals to maintain normal functioning of the process. In one non-limiting example, the control application conforms to the international standard IEC 61131.

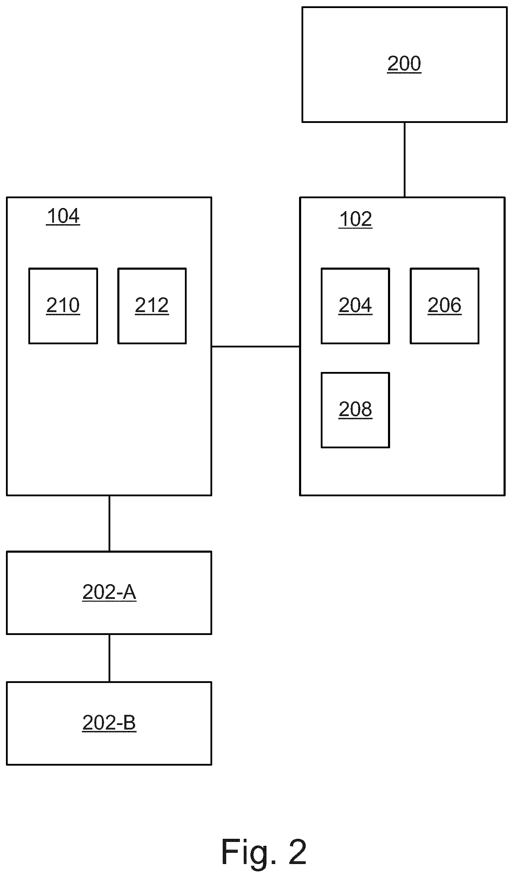

FIG. 2 schematically illustrates the process control system 100 in situ, that is, in communication with the engineering tool 200 and with one or more field devices 202, which in the non-limiting example depicted in the figure include field device 202-A and field device 202-B. For convenience, only the controller 102 and the adapter 104 are illustrated in FIG. 2.

The engineering tool 200 (typically implemented as a software package) is used to create configuration data for the process control system 100, which can be downloaded to the controller 102.

The controller 102 comprises logic circuitry 204 configured to execute the control application. The logic circuitry 204 may comprise a CPU, MCU, SoC, FPGA, DSP, and/or an Al-engine, together with any memory to be used in the processing of signals. The logic circuitry 204 may be further configured to perform any one or more of the other operations described herein.

The controller 102 further comprises a communications interface 206 for handling communications between the logic circuitry 204 and the fieldbus adapter 104.

The controller 102 further comprises power down circuitry 208 for handling power down sequencing in case of power loss.

The fieldbus adapter 104 comprises a fieldbus communications interface (FCI) 210 for interfacing with the field devices 202 over a communications network in the form of a fieldbus. The fieldbus communications interface 210 comprises field bus-specific transceivers and/or hardware drivers for the fieldbus protocol implemented by the adapter 104. The adapter 104 may be furthermore connectable to least one input/output (I/O) module for inputting signals from, and/or outputting signals to, the field devices 202.

The adapter 104 further comprises non-volatile storage 212 storing data including an identifier of the adapter 104, such as its serial number.

The power down circuitry 208 comprises at least one energy storage device such as a capacitor to store energy for a coordinated power down sequence, together with at least one data storage device (e.g., non-volatile memory) to save application data after power loss has been detected. The power down circuitry 208 is configured to detect loss of power and, responsively, to carry out a power down sequence. The power down sequence comprises the power down circuitry 208 capturing the state of the control application for retention in the data storage device. In one non-limiting example, the power down sequence comprises the following steps: 1) detecting power loss; 2) fetching the control application state data from the control application; 3) storing the control application state data in the data storage device. The power down circuitry 208 may be further configured to perform a power up sequence to resume execution of the control application following restoration of power.

The power down circuitry 208 is configured to determine or obtain values of the following parameters:
- power consumption (of all components necessary for carrying out the power down sequence);
- amount of energy stored in the energy storage device;
- amount of data required to be saved by the control application executing on the controller 102 in order to capture or retain its state;
- a write data rate of the data storage device;
- a detection time; and
- in the non-limiting example described herein, in which the data storage device comprises a cache, a time constant of the cache.

The power consumption can be statically predicted (for example, based on an indication as to which peripherals are enabled) or measured during production.

The amount of data required to be saved can be extracted from the control application.

The amount of energy stored in the energy storage device can be determined by the power down circuitry 208 using self-diagnostics. For example, in the case that the energy storage device comprises a capacitor, the power down circuitry 208 may be configured to perform a test operation in which the power down circuitry 208 measures the amount of stored energy using a short test discharge. Dependent on how long it takes the energy storage device to discharge a predefined amount of energy, the amount of energy stored in the energy storage device can be determined. For example, using a capacitor as the energy storage device, the power down circuitry 208 may read the voltage across the capacitor U_{c} by using an ADC or other method. The power down circuitry 208 may then discharge the voltage across the capacitor to a defined voltage Uₒ using a defined current Iₙ and defined resistor value R. (The current is preferably higher than leakage current.) The power down circuitry 208 measures the discharge time ΔT and calculates the capacitance as C = - ΔT / (R*Iₙ(Uₒ/U_{c})) The amount of energy stored in the energy storage device is determined as E(Joule) = 0.5* U_{c}² * C.

Based on the determined amount of energy stored in the energy storage device, the power down circuitry 208 calculates the time available for the power down sequence, TPDA, as TPDA=ECAP/PCPU, where ECAP is the determined amount of energy stored in the energy storage device, and P_{CPU} is the power consumption (for example of the CPU which in this non-limiting example both implements the power down circuitry 208 and executes the control application).

The power down circuitry 208 is further configured to calculate the time required for the power down sequence, or to store a precalculated time required for the power down sequence, which is constant for a given control application. The time required for the power down sequence, T_{PDR}, is calculated in this example as T_{PDR} = T_{D}+ SAPP/DR+ T_{C}, where T_{D} is the detection time, that is, the time required for detection of power loss, SAPP is the amount (e.g., in bytes) of control application state data to be saved, DR is the write data rate of the data storage device, and TC is the time constant of the cache of the data storage device (that is, the time required for the data storage device to transfer the data from cache to non-volatile memory).

The amount of stored energy may reduce over time due to aging or degradation of the components used to implement the energy storage device. For most energy storage devices, the degradation in storage capacity over time can be estimated using a known component degradation model. In one non-limiting example, in which the energy storage device comprises an aluminium electrolyte capacitor, the component degradation model may comprise, or may be based on, an endurance characteristic of the capacitor, which may be specified in the datasheet for the component, for example as a lifetime of 10000 hours at 105 °C (after which the capacitance is 30% less than initial value). The component degradation model may be based on further parameters which influence lifetime such as leakage current, tangent of loss angle, frequency, and so on.

Performing the self-diagnostics may therefore comprise dynamically estimating or predicting a condition of the energy storage device corresponding to at least one future timepoint using the component degradation model. In particular, a prediction may be made concerning the timepoint at which component degradation causes T_{PDR} to exceed T_{PDA} * F, where F denotes an optional safety factor which takes into account certain assumptions, for example that environmental conditions such as temperature remain constant during operation or represent the worst case scenario. At the predicted timepoint, which may be viewed as a time to failure, the risk that future power loss leads to data loss becomes too great.

The predicted timepoint can be presented to the operator to indicate how much time remains until maintenance has to be scheduled. The larger the application, the more urgent it becomes to inform the end user about the capability loss, since predictive maintenance will be required sooner. In this way, information regarding the state of the energy storage device is presented in a way that is simple to understand for the end user.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

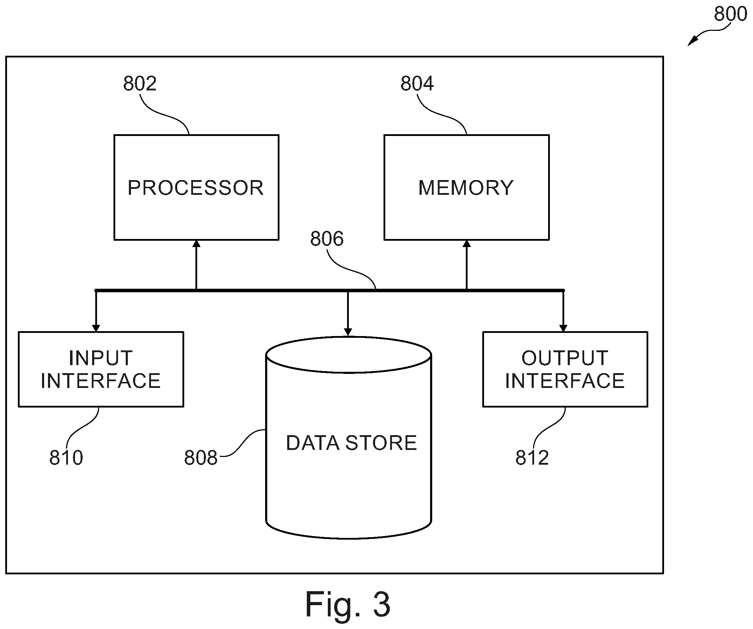

FIG. 3 illustrates an exemplary computing system 800 that can be used in accordance with the systems and methods disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the methods described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive.

The mere fact that certain measures are recited in mutually different dependent claims does not indicate that a combination of these measures cannot be used advantageously.

Any reference signs in the claims should not be construed as limiting the scope.

## Claims

1. Power down circuitry (208) for a controller (102, 108) of a process control system (100), the power down circuitry comprising:
at least one energy storage device configured to store energy for a power down sequence; and
at least one data storage device to store control application state data,
wherein the power down circuitry is configured to detect power loss and, in response to the detection of power loss, to carry out the power down sequence, wherein the power down sequence comprises obtaining and storing the control application state data in the data storage device,
**characterized in that** the power down circuitry is further configured to determine at least one reliability indicator for output to an operator of the process control system, wherein the at least one reliability indicator comprises a state retention capability of the power down circuitry (208), wherein the state retention capability comprises: i) a binary indication as to whether the control application state data can be obtained and stored in its entirety by the power down circuitry; or ii) an indication as to a number, fraction, or percentage of signals used by a control application that can be retained.

2. The power down circuitry of claim 1, further configured to perform degradation modelling of the energy storage device.

3. The power down circuitry of claim 2, further configured to perform degradation modelling to predict a remaining operational lifetime of the energy storage device.

4. The power down circuitry of claim 2 or 3, further configured to predict when maintenance should be performed, based on a condition of the energy storage device as determined by the degradation modelling.

5. The power down circuitry of claim 1, further configured to determine the state retention capability based on a time available for the power down sequence and a time required for the power down sequence.

6. The power down circuitry of claim 5, further configured to determine the state retention capability based on operational parameters comprising one or more of:
- power consumption;
- amount of energy stored in the energy storage device;
- amount of control application state data required to be saved by a control application executing on the controller (102, 108);
- a write data rate of the data storage device;
- a power loss detection time; and
- a time constant of a cache of the data storage device.

7. The power down circuitry of claim 6, further configured to determine the power consumption.

8. The power down circuitry of claim 6 or 7, wherein the reliability indicator comprises a prediction of a timepoint at which component degradation causes the state retention capability of the power down circuitry to fall below requirements.

9. The power down circuitry of any of claims 6-8, further configured to determine a capacity of the energy storage device by performing self-diagnostics.

10. The power down circuitry of any of claims 6-9, further configured to obtain from the user an indication of the most important control application state data to be retained and to use the user-provided indication of importance when obtaining and storing the control application state data in the data storage device as part of the power down sequence.

11. The power down circuitry of any preceding claim, further configured to send the reliability indicator of the power down circuitry for output to the operator.

12. A process control system (100) comprising the power down circuitry (208) of any preceding claim.

13. A method of performing power down sequencing for a controller (102, 108) of a process control system (100), the method comprising:
detecting power loss;
in response to the detection of power loss, carrying out a power down sequence, wherein the power down sequence comprises obtaining and storing control application state data; and
determining at least one reliability indicator for output to an operator of the process control system, wherein the at least one reliability indicator comprises a state retention capability of the power down circuitry (208), wherein the state retention capability comprises: i) a binary indication as to whether the control application state data can be obtained and stored in its entirety by the power down circuitry; or ii) an indication as to a number, fraction, or percentage of signals used by a control application that can be retained.

14. A computer-readable medium comprising instructions which, when executed by a computing system, cause the computing system to perform the method of claim 13.

## Patentansprüche

1. Abschaltschaltung (208) für einen Controller (102, 108) eines Prozesssteuerungssystems (100), wobei die Abschaltschaltung umfasst:
mindestens eine Energiespeichervorrichtung, die dazu eingerichtet ist, Energie für eine Abschaltsequenz zu speichern; und
mindestens eine Datenspeichervorrichtung zum Speichern von Steuerungsanwendungs-Zustandsdaten,
wobei die Abschaltschaltung dazu eingerichtet ist, einen Leistungsverlust zu detektieren und, in Reaktion auf die Detektion des Leistungsverlusts, die Abschaltsequenz durchzuführen, wobei die Abschaltsequenz das Erlangen und Speichern der Steuerungsanwendungs-Zustandsdaten in der Datenspeichervorrichtung umfasst, **dadurch gekennzeichnet, dass**
die Abschaltschaltung ferner dazu eingerichtet ist, mindestens einen Zuverlässigkeitsindikator zur Ausgabe an einen Bediener des Prozesssteuerungssystems zu bestimmen, wobei der mindestens eine Zuverlässigkeitsindikator eine Zustandsbeibehaltungsfähigkeit der Abschaltschaltung (208) umfasst, wobei die Zustandsbeibehaltungsfähigkeit umfasst: i) eine binäre Anzeige dahingehend, ob die Steuerungsanwendungs-Zustandsdaten von der Abschaltschaltung vollständig erlangt und gespeichert werden können; oder ii) eine Anzeige hinsichtlich einer Anzahl, eines Bruchteils oder eines Prozentsatzes von Signalen, die von einer Steuerungsanwendung verwendet werden und beibehalten werden können.

2. Abschaltschaltung nach Anspruch 1, ferner dazu eingerichtet, eine Degradationsmodellierung der Energiespeichervorrichtung durchzuführen.

3. Abschaltschaltung nach Anspruch 2, ferner dazu eingerichtet, eine Degradationsmodellierung durchzuführen, um eine verbleibende Betriebslebensdauer der Energiespeichervorrichtung vorherzusagen.

4. Abschaltschaltung nach Anspruch 2 oder 3, ferner dazu eingerichtet, auf Grundlage eines Zustands der Energiespeichervorrichtung, wie durch die Degradationsmodellierung bestimmt, vorherzusagen, wann eine Wartung durchgeführt werden sollte.

5. Abschaltschaltung nach Anspruch 1, ferner dazu eingerichtet, die Zustandsbeibehaltungsfähigkeit auf Grundlage einer für die Abschaltsequenz verfügbaren Zeit und einer für die Abschaltsequenz erforderlichen Zeit zu bestimmen.

6. Abschaltschaltung nach Anspruch 5, ferner dazu eingerichtet, die Zustandsbeibehaltungsfähigkeit auf Grundlage von Betriebsparametern zu bestimmen, die einen oder mehrere der folgenden Parameter umfassen:
- Leistungsaufnahme;
- in der Energiespeichervorrichtung gespeicherte Energiemenge;
- Menge an Steuerungsanwendungs-Zustandsdaten, die durch eine auf dem Controller (102, 108) ausgeführte Steuerungsanwendung gespeichert werden müssen;
- Schreibdatenrate der Datenspeichervorrichtung;
- Leistungsverlust-Detektionszeit; und
- Zeitkonstante eines Caches der Datenspeichervorrichtung.

7. Abschaltschaltung nach Anspruch 6, ferner dazu eingerichtet, die Leistungsaufnahme zu bestimmen.

8. Abschaltschaltung nach Anspruch 6 oder 7, wobei der Zuverlässigkeitsindikator eine Vorhersage eines Zeitpunkts umfasst, zu dem eine Komponentendegradation bewirkt, dass die Zustandsbeibehaltungsfähigkeit der Abschaltschaltung unter Anforderungen abfällt.

9. Abschaltschaltung nach einem der Ansprüche 6 - 8, ferner dazu eingerichtet, eine Kapazität der Energiespeichervorrichtung durch Durchführen einer Selbstdiagnose zu bestimmen.

10. Abschaltschaltung nach einem der Ansprüche 6 - 9, ferner dazu eingerichtet, von dem Benutzer eine Angabe der wichtigsten beizubehaltenden Steuerungsanwendungs-Zustandsdaten zu erlangen und die von dem Benutzer bereitgestellte Wichtigkeitsangabe beim Erlangen und Speichern der Steuerungsanwendungs-Zustandsdaten in der Datenspeichervorrichtung als Teil der Abschaltsequenz zu verwenden.

11. Abschaltschaltung nach einem der vorhergehenden Ansprüche, ferner dazu eingerichtet, den Zuverlässigkeitsindikator der Abschaltschaltung zum Ausgeben an den Bediener zu senden.

12. Prozesssteuerungssystem (100), umfassend die Abschaltschaltung (208) nach einem der vorhergehenden Ansprüche.

13. Verfahren zum Durchführen einer Abschaltsequenz für einen Controller (102, 108) eines Prozesssteuerungssystems (100), wobei das Verfahren umfasst:
Detektieren eines Leistungsverlusts;
in Reaktion auf die Detektion des Leistungsverlusts Durchführen einer Abschaltsequenz, wobei die Abschaltsequenz das Erlangen und Speichern von Steuerungsanwendungs-Zustandsdaten umfasst; und
Bestimmen mindestens eines Zuverlässigkeitsindikators zur Ausgabe an einen Bediener des Prozesssteuerungssystems, wobei der mindestens eine Zuverlässigkeitsindikator eine Zustandsbeibehaltungsfähigkeit der Abschaltschaltung (208) umfasst, wobei die Zustandsbeibehaltungsfähigkeit umfasst: i) eine binäre Anzeige dahingehend, ob die Steuerungsanwendungs-Zustandsdaten von der Abschaltschaltung vollständig erlangt und gespeichert werden können; oder ii) eine Anzeige hinsichtlich einer Anzahl, eines Bruchteils oder eines Prozentsatzes von Signalen, die von einer Steuerungsanwendung verwendet werden und beibehalten werden können.

14. Computerlesbares Medium, umfassend Anweisungen, die, wenn sie von einem Computersystem ausgeführt werden, das Computersystem veranlassen, das Verfahren nach Anspruch 13 durchzuführen.

## Revendications

1. Circuits de mise hors tension (208) pour un contrôleur (102, 108) d'un système de commande de processus (100), les circuits de mise hors tension comprenant :
au moins un dispositif de stockage d'énergie configuré pour stocker de l'énergie pour une séquence de mise hors tension ; et
au moins un dispositif de stockage de données pour mémoriser des données d'état d'application de commande, où les circuits de mise hors tension sont configurés pour détecter une perte de puissance et, en réponse à la détection d'une perte de puissance, pour exécuter la séquence de mise hors tension, la séquence de mise hors tension comprenant d'obtenir et de stocker les données d'état d'application de commande dans le dispositif de stockage de données,
**caractérisés en ce que**
les circuit de mise hors tension sont en outre configurés pour déterminer au moins un indicateur de fiabilité à fournir à un opérateur du système de commande de processus, ledit au moins un indicateur de fiabilité comprenant une capacité de rétention d'état des circuits de mise hors tension (208), la capacité de rétention d'état comprenant : i) une indication binaire indiquant si les données d'état d'application de commande peuvent être obtenues et stockées dans leur intégralité par les circuits de mise hors tension ; ou ii) une indication quant à un nombre, une fraction ou un pourcentage de signaux utilisés par une application de commande qui peuvent être conservés.

2. Circuits de mise hors tension selon la revendication 1, configuré en outre pour exécuter une modélisation de dégradation du dispositif de stockage d'énergie.

3. Circuits de mise hors tension selon la revendication 2, configurés en outre pour exécuter une modélisation de dégradation afin de prédire une durée de vie opérationnelle restante du dispositif de stockage d'énergie.

4. Circuits de mise hors tension selon la revendication 2 ou la revendication 3, configurés en outre pour prédire quand une maintenance doit être effectuée, sur la base d'un état du dispositif de stockage d'énergie tel que déterminé par le modèle de dégradation.

5. Circuits de mise hors tension selon la revendication 1, configurés en outre pour déterminer la capacité de rétention d'état sur la base d'un temps disponible pour la séquence de mise hors tension et d'un temps requis pour la séquence de mise hors tension.

6. Circuits de mise hors tension selon la revendication 5, configurés en outre pour déterminer la capacité de rétention d'état sur la base de paramètres opérationnels comprenant un ou plusieurs des paramètres suivants :
- la consommation d'énergie ;
- la quantité d'énergie stockée dans le dispositif de stockage d'énergie ;
- la quantité de données d'état d'application de commande devant être sauvegardées par une application de commande s'exécutant sur le contrôleur (102, 108) ;
- le débit de données d'écriture du dispositif de stockage de données ;
- le temps de détection de perte de puissance ; et
- la constante de temps d'un cache du dispositif de stockage de données.

7. Circuits de mise hors tension selon la revendication 6, configurés en outre pour déterminer la consommation d'énergie.

8. Circuits de mise hors tension selon la revendication 6 ou la revendication 7, dans lequel l'indicateur de fiabilité comprend une prédiction d'un moment auquel la dégradation d'un composant amène la capacité de rétention d'état des circuits de mise hors tension à tomber en dessous des exigences.

9. Circuits de mise hors tension selon l'une quelconque des revendications 6 à 8, configurés en outre pour déterminer une capacité du dispositif de stockage d'énergie en effectuant des autodiagnostics.

10. Circuits de mise hors tension selon l'une quelconque des revendications 6 à 9, configurés en outre pour obtenir de l'utilisateur une indication des données d'état d'application de commande les plus importantes à conserver et pour utiliser l'indication d'importance fournie par l'utilisateur lors de l'obtention et du stockage des données d'état d'application de commande dans le dispositif de stockage de données en tant que partie de la séquence de mise hors tension.

11. Circuits de mise hors tension selon l'une quelconque des revendications précédentes, configurés en outre pour envoyer l'indicateur de fiabilité des circuits de mise hors tension pour sortie à l'opérateur.

12. Système de commande de processus (100) comprenant les circuits de mise hors tension (208) selon l'une quelconque des revendications précédentes.

13. Procédé d'exécution d'un séquencement de mise hors tension pour un contrôleur (102, 108) d'un système de commande de processus (100), le procédé comprenant les étapes suivantes :
détecter une perte de puissance ;
en réponse à la détection d'une perte de puissance, exécuter une séquence de mise hors tension, la séquence de mise hors tension comprenant d'obtenir et de stocker des données d'état d'application de commande ; et
déterminer au moins un indicateur de fiabilité à fournir à un opérateur du système de commande de processus, ledit au moins un indicateur de fiabilité comprenant une capacité de rétention d'état des circuits de mise hors tension (208), la capacité de rétention d'état comprenant : i) une indication binaire indiquant si les données d'état d'application de commande peuvent être obtenues et stockées dans leur intégralité par les circuits de mise hors tension ; ou ii) une indication quant à un nombre, une fraction ou un pourcentage de signaux utilisés par une application de commande qui peuvent être conservés.

14. Support lisible par ordinateur comprenant des instructions qui, lorsqu'elles sont exécutées par un système informatique, amènent le système informatique à réaliser le procédé selon la revendication 13.
